# EUROPÄISCHE PATENTSCHRIFT

(11) **EP 3 938 297 B1**
(45) Veröffentlichungstag und Bekanntmachung des Hinweises auf die Patenterteilung: **25.11.2026**
(21) Anmeldenummer: 20703408.3
(22) Anmeldetag: 30.01.2020
(51) Int. Cl.: B65G 23/20, B65G 23/30

(54) **TRANSPORTVORRICHTUNG SOWIE TRANSPORTVERFAHREN MIT EINER DERARTIGEN TRANSPORTVORRICHTUNG**
TRANSPORT DEVICE AND TRANSPORT METHOD USING SUCH A TRANSPORT DEVICE
DISPOSITIF DE TRANSPORT ET PROCÉDÉ DE TRANSPORT INCLUANT UN DISPOSITIF DE TRANSPORT DE CE TYPE

(30) Priorität: 12.03.2019 DE 102019106202
(43) Veröffentlichungstag der Anmeldung: 19.01.2022
(73) Patentinhaber: KHS GmbH, 44143 Dortmund (DE)
(72) Erfinder: GÖTZE, Sebastian, 44309 Dortmund (DE); SCHOLZ, Ulrich, 59348 Lüdinghausen (DE); SCHEFFELS, Jonathan, 44147 Dortmund (DE)
(86) Internationale Anmeldenummer: PCT/EP2020/052271
(87) Internationale Veröffentlichungsnummer: WO 2020/182367

(56) Entgegenhaltungen:
- DE-A1- 102017 120 700
- US-A- 3 712 448
- US-A1- 2010 000 843
- US-B1- 6 170 632

## Beschreibung

Die Erfindung bezieht sich auf eine Transportvorrichtung zum Transportieren von Stückgut gemäß dem Oberbegriff des Patentanspruches 1. Weiterhin bezieht sich die vorliegende Erfindung auf ein Transportverfahren mit einer derartigen Transportvorrichtung gemäß dem Oberbegriff des Patentanspruches 12.

"Stückgut" im Sinne der vorliegenden Erfindung sind insbesondere "Behälter" wie beispielsweise Dosen, Flaschen, Tuben, Pouches, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind. Das "Stückgut" kann im Rahmen der vorliegenden Erfindung aber auch von "Gebinden" wie beispielsweise Paketen, Kartons, Trays, Kisten oder Folienpacks, gebildet werden, die jeweils mindestens zwei Behälter und wenigstens ein (Um-) Verpackungselement aufweisen.

Transportvorrichtungen bzw. Transporteure zum Transportieren von Stückgütern mit einer Vielzahl von jeweils eine geschlossene Schlaufe bildenden und umlaufend angetriebenen Transportelementen, insbesondere auch in Form von Transportketten oder Scharnierbandketten, sind hinlänglich bekannt. Die Transportelemente bilden jeweils mit ihrer oberen, sich gegen wenigstens eine Gleichführung abstützenden Länge die gemeinsame horizontale oder im Wesentlichen horizontale Transportebene oder -fläche, auf die das Stückgut mit seinem Stückgutboden oder seinem Standboden aufsteht.

Bekannt ist es hierbei auch, dass die Transportelemente nicht in beliebig großer Länge ausgeführt werden können, da bei zu großer Länge die zwischen der jeweiligen Transportkette und der Gleitführung entstehenden Reibungskräfte die maximale Zugfestigkeit der Transportelemente, insbesondere auch bei einem Dauerbetrieb der Transportvorrichtung, überschreiten würden. Aus diesem Grunde ist es insbesondere bei Transporteuren größerer Länge üblich, mehrere in Transportrichtung aneinander anschließende Transportvorrichtungen vorzusehen, wodurch sich dann auch die Möglichkeit einer verbesserten Steuerung und/oder Regelung der Leistung und/oder Transportgeschwindigkeit der Transportelemente z.B. durch einen eigenen Antrieb für jedes Transportband oder für eine Gruppe von Transportbändern ergibt.

Aus der auf die Anmelder/in zurückgehenden DE 10 2015 113 435 A1 ist eine gattungsgemäße Transportvorrichtung zum Transportieren von Stückgut in einer Transportrichtung mit wenigstens einem, eine geschlossene Schlaufe bildenden und umlaufend angetriebene Transportkette bekannt geworden, das zur Ausbildung jeweils einer geschlossenen Schlaufe über eine bezogen auf die Transportrichtung vordere Umlenkeinrichtung sowie über eine bezogen auf die Transportrichtung rückwärtige Umlenkeinrichtung geführt ist, wobei die Transportvorrichtung zwischen der vorderen und der rückwärtigen Umlenkeinrichtung mittels der wenigstens einen Transportkette eine Transportstrecke für das Stückgut ausbildet, wobei zum Antreiben der wenigstens einen Transportkette zwischen den Umlenkeinrichtungen mindestens eine Antriebsanordnung vorgesehen ist, die entlang der Transportstrecke mit der wenigstens einen Transportkette in Wirkverbindung steht, wobei die wenigstens eine Transportkette mehrere drehbewegliche und relativ zueinander verschiebbar angeordnete Kettenglieder aufweist, so dass durch eine relative Verschiebung der einzelnen Kettenglieder zueinander die Gesamtlänge der jeweiligen Transportkette veränderbar ist, und wobei die Transportstrecke wenigstens zwei Transportstreckenabschnitte aufweist, die sich jeweils zwischen einer Umlenkeinrichtung und der mindestens einen Antriebsanordnung und/oder sich zwischen zwei in Transportrichtung aufeinander folgenden Antriebsanordnungen erstreckt.

Aus der Druckschrift DE 10 2017 120 700 A1 ist eine Transportvorrichtung, gemäß dem Oberbegriff des Anspruchs 1, zum Transportieren von Stückgut in einer Transportrichtung mit wenigstens einem, eine geschlossene Schlaufe bildenden und umlaufend angetriebenen Transportelement bekannt geworden. Der wesentliche Aspekt gemäß der Transportvorrichtung besteht dabei darin, dass ein sich in Umlaufrichtung der Transportkette an die mindestens eine Antriebsanordnung unmittelbar anschließender Transportstreckenabschnitt zumindest einen Übergabeabschnitt und einen Stauabschnitt aufweist, wobei die zumindest eine Antriebsanordnung zur relativen Verschiebung der Kettenglieder zueinander im Übergangsabschnitt und zum zumindest teilweisen Antreiben der bereits verschobenen Kettenglieder im Stauabschnitt ausgebildet ist.

Ferner ist aus der Druckschrift US 6 170 632 B1 ein Fahrsteig bekannt geworden, der Benutzer in zwei entgegengesetzte Richtungen befördern kann. Eine Anzahl von Paletten ist zum Runden oder Umlaufen auf ringförmigen Schienen mit zwei linearen Sektoren und angeordnet. Schraubenstangen sind auf den linearen Sektoren und der Schienen angeordnet. Die benachbarten Paletten sind durch Schnurelemente miteinander verbunden. Die Paletten werden auf den linearen Sektoren in entgegengesetzten Richtungen bewegt. Jede Palette wird an ihrem vorderen Ende unter ein vorderes Ende ihrer vorangehenden Palette eingeführt, um eine durchgehende Lauffläche bereitzustellen, so dass viele Benutzer sicher transportiert werden.

Kommt es dabei entlang der Transportstrecke zu einer Stauchung der Kettenglieder, also einer der Transportkette in einem Transportstreckenabschnitt, und damit verbunden zu einer Akkumulation der auf diesem Transportstreckenabschnitt befindlichen Stückgüter, so hat dieser bereits gestauchte Transportstreckenabschnitt eine relative Transportgeschwindigkeit von null im Vergleich zu der in Transportrichtung rückwärtigen Transportstrecke, insbesondere den noch auflaufenden weiteren Kettengliedern. In anderen Worten stehen die auf diesem gestauchten Transportstreckenabschnitt befindlichen Stückgüter für ein bestimmtes Zeitintervall der Akkumulation still und werden nicht in Transportrichtung weiterbefördert. Werden dann die in Bezug auf die bereits gestauchten Kettenglieder in Transportrichtung gesehen rückwärtigen weiteren Kettenglieder auf diese bereits gestauchten Kettenglieder aufgeschoben, so kann dies einen ruckartigen, beispielsweise elastischen Stoß auf den bereits gestauchten und sich im Stillstand befindlichen Transportstreckenabschnitt verursachen.

Ausgehend hiervon liegt der vorliegenden Erfindung die Aufgabe zu Grunde, eine Transportvorrichtung zum Transportieren von Stückgütern bereitzustellen, die die vorgenannten Nachteile vermeidet und hierbei insbesondere keinen elastischen oder sogar plastischen Stoß auf die bereits gestauchten Kettenglieder verursacht. Diese Aufgabe wird mit den Merkmalen des Patentanspruches 1 gelöst. Die Unteransprüche betreffen dabei besonders bevorzugte Ausführungsvarianten der Erfindung.

Der wesentliche Aspekt der vorliegenden Erfindung besteht dabei darin, eine Transportvorrichtung zum Transportieren von Stückgut in einer Transportrichtung vorzuschlagen, mit wenigstens einer, eine geschlossene Schlaufe bildenden und in einer Umlaufrichtung umlaufend angetriebenen Transportkette, die zur Ausbildung jeweils einer geschlossenen Schlaufe über eine bezogen auf die Transportrichtung vordere Umlenkeinrichtung sowie über eine bezogen auf die Transportrichtung rückwärtige Umlenkeinrichtung geführt ist. Dabei bildet die Transportvorrichtung zwischen der vorderen und der rückwärtigen Umlenkeinrichtung mittels der wenigstens einen Transportkette eine Transportstrecke für das Stückgut aus. Zum Antreiben der wenigstens einen Transportkette ist zwischen den Umlenkeinrichtungen mindestens eine Antriebsanordnung vorgesehen, die entlang der Transportstrecke mit der wenigstens einen Transportkette in Wirkverbindung steht. Hierbei weist die wenigstens eine Transportkette mehrere drehbewegliche und relativ zueinander verschiebbar angeordnete Kettenglieder auf. Besonders vorteilhaft sind die Kettenglieder so ausgebildet, dass diese auch ineinander verschiebbar, also ineinander verfahrbar ausgebildet sind.

Die vorliegende Erfindung zeichnet sich insbesondere dadurch aus, dass eine Antriebsanordnung mit zumindest einem Eingangsabschnitt und einem Ausgangsabschnitt vorgesehen ist. Dabei schließt sich die Antriebsanordnung bevorzugt in Umlaufrichtung der Transportkette an den Einlauf der Transportkette in den anschließenden Transportstreckenabschnitt an.

Die zumindest eine Antriebsanordnung ist zumindest zur
- relativen Verschiebung der Kettenglieder zueinander im Eingangsabschnitt und im Ausgangsabschnitt,
- zum Weiterfördern der Kettenglieder entlang des Transportstreckenabschnittes mit gleichbleibendem relativen Abstand der Kettenglieder zueinander entlang des Eingangsabschnittes und des Ausgangsabschnittes, sowie zum
- Antreiben der zumindest teilweise akkumulierten Kettenglieder im Eingangsabschnitt als auch im Ausgangsabschnitt
ausgebildet.

Gemäß einer vorteilhaften Ausführungsvariante ist dabei vorgesehen, dass die zumindest eine Antriebsanordnung dazu ausgebildet ist, zumindest vier unterschiedliche Betriebszustände der Transportkette entlang des Eingangs- und Ausgangsabschnittes zu erzeugen.

Gemäß einer weiteren vorteilhaften Ausführungsvariante ist dabei vorgesehen, dass zumindest eine Antriebsanordnung dazu ausgebildet ist, einen ersten Betriebszustand zu erzeugen, bei dem die Transportkette gelängt in den Eingangsabschnitt einläuft und komprimiert aus dem Ausgangsabschnitt aufläuft.

Gemäß einer weiteren vorteilhaften Ausführungsvariante ist dabei vorgesehen, dass zumindest eine Antriebsanordnung dazu ausgebildet ist, einen zweiten Betriebszustand zu erzeugen, bei dem die Transportkette akkumuliert in den Eingangsabschnitt einläuft und gelängt aus dem Ausgangsabschnitt auflaufen.

Gemäß einer weiteren vorteilhaften Ausführungsvariante ist dabei vorgesehen, dass zumindest eine Antriebsanordnung dazu ausgebildet ist, einen dritten Betriebszustand zu erzeugen, bei dem die Transportkette gelängt in den Eingangsabschnitt einläuft und gelängt aus dem Ausgangsabschnitt wieder aufläuft.

Gemäß einer weiteren vorteilhaften Ausführungsvariante ist dabei vorgesehen, dass zumindest eine Antriebsanordnung dazu ausgebildet ist, einen vierten Betriebszustand zu erzeugen, bei dem die Transportkette akkumuliert in den Eingangsabschnitt einläuft und akkumuliert aus dem Ausgangsabschnitt wieder aufläuft.

Erfindungsgemäß ist vorgesehen, dass die zumindest eine Antriebanordnung als Schneckenantrieb mit zumindest einer motorisch angetriebenen Schnecke ausgebildet ist.

Der Vollständigkeit halber sei an dieser Stelle darauf hingewiesen, dass unter dem nachfolgend verwendeten Begriff Gewindegang - wie in der Technik üblich - die fortlaufende, wendelartige Vertiefung in der ursprünglich zylinderförmigen Wand des Schraubenkörpers, hier der Antriebsschnecke, verstanden wird.

Erfindungsgemäß ist vorgesehen, dass die Schnecke mindestens einen Gewindegang mit zwei Gewindegangabschnitten aufweist, wobei der erste Gewindegangabschnitt in Umlaufrichtung oder Förderrichtung der Antriebskette gesehen entlang des Eingangsabschnitts und der zweite Gewindegangabschnitt in Umlaufrichtung gesehen entlang des Ausgangsabschnitt vorgesehen ist.

Erfindungsgemäß ist vorgesehen, dass in jedem der beiden Gewindegangabschnitte eine erste Gewindesteigung des vollständig gelängten Transfers der Transportkette sowie eine zweite Gewindesteigung des vollständig akkumulierten Transfers der Transportkette überlagert vorgesehen sind.

Gemäß einer weiteren vorteilhaften Ausführungsvariante ist dabei vorgesehen, dass die erste und zweite Gewindesteigung entlang des jeweiligen Gewindegangabschnitts derart überlagert vorgesehen sind, dass die Bereiche entlang des jeweiligen Gewindegangabschnittes in denen sich die erste und zweite Gewindesteigung nicht schneiden, einen nutförmigen Freiraum zwischen der ersten und der zweiten Gewindesteigung in Form des entsprechenden Gewindegangabschnitts ausbilden.

Gemäß einer weiteren vorteilhaften Ausführungsvariante ist dabei vorgesehen, dass die erste und zweite Gewindesteigung derart aufeinander abgestimmt eingestellt ist, dass sich die beiden Gewindesteigungen zumindest in einem Schnittpunkt von dem ersten Gewindegangabschnitt in den zweiten Gewindegangabschnitt schneiden, der mit einem Übergabepunkt von dem Eingangsabschnitt zum Ausgangsabschnitt zusammenfällt.

Gemäß einer weiteren vorteilhaften Ausführungsvariante ist dabei vorgesehen, dass der erste und zweite Gewindegangabschnitt mit seiner jeweiligen ersten und zweiten Gewindesteigung jeweils achsensymmetrisch zu einer Symmetrieachse ausgebildet ist.

Gemäß einer weiteren vorteilhaften Ausführungsvariante ist dabei vorgesehen, dass der erste Gewindegangabschnitt durch eine vordere und hintere Flanke entlang des Eingangsabschnitts seitlich begrenzt ist, wobei die jeweils in Umlaufrichtung und/oder Transportrichtung der Transportkette gesehene hintere Flanke die erste Gewindesteigung und die jeweils in Umlaufrichtung gesehene vordere Flanke die zweite Gewindesteigung aufweist.

Gemäß einer weiteren vorteilhaften Ausführungsvariante ist dabei vorgesehen, dass der zweite Gewindegangabschnitt durch die vordere und hintere Flanke entlang des Ausgangsabschnitts seitliche begrenzt ist, wobei die jeweils in Umlaufrichtung und/oder Transportrichtung der Transportkette gesehene hintere Flanke die zweite Gewindesteigung und die jeweils in Umlaufrichtung gesehene vordere Flanke die erste Gewindesteigung aufweist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1a - 1c: eine schematische Seitenansicht bzw. Unteransicht einer beispielhaften Ausführungsvariante einer erfindungsgemäßen Transportvorrichtung
- Fig. 2a und 2b: eine schematische Seitenansicht bzw. Draufsicht einer beispielhaften Transportkette,
- Figur 3: eine schematische Seitenansicht einer beispielhaften Transportkette,

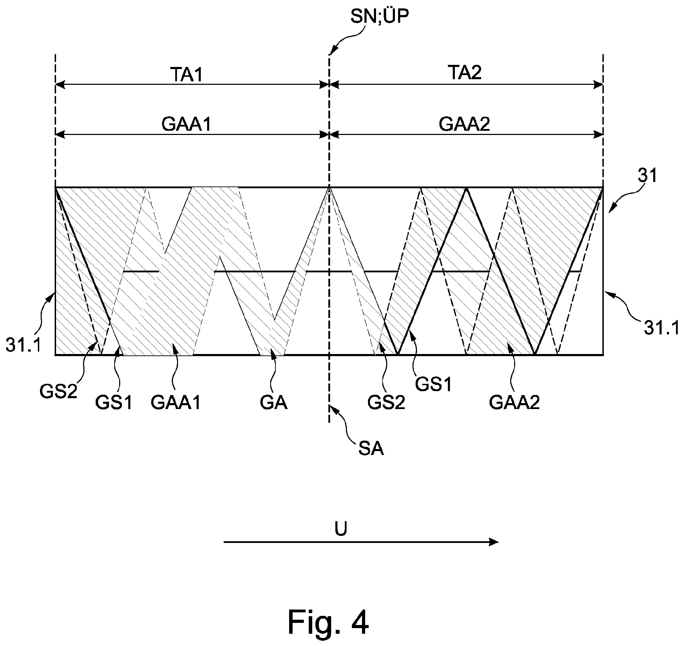

- Figur 4: eine schematische Funktionsdarstellung einer Schnecke,

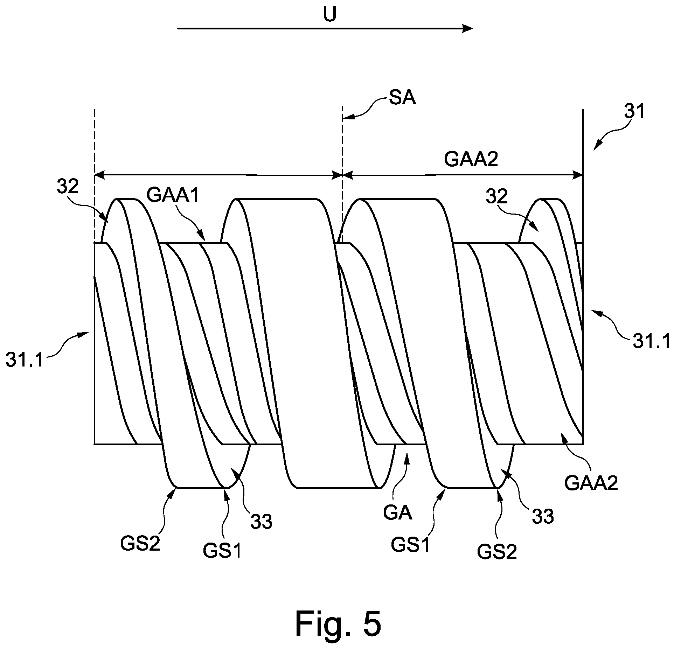

- Figur 5: eine schematische Seitenansicht einer Schnecke,
- Figuren 6a und 6b: jeweils ein Ausschnitt einer Schnecke in einer schematischen Seitenansicht mit akkumulierten und gelängten Kettengliedern, und
- Figuren 7a und 7b: jeweils ein Ausschnitt einer Schnecke in einer schematischen Seitenansicht mit akkumulierten und gelängten Kettengliedern.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Die in den Figuren allgemein mit 1 bezeichnete Transportvorrichtung dient beispielsweise zum Transportieren von Stückgut 2 in wenigstens einer Transportrichtung A zwischen jeweils nicht nähergehend dargestellten Behälterbehandlungsmaschinen und/oder Überschubstationen und/oder Transferstationen und/oder Überleitstationen für die Verpackungs- und/oder Getränkeindustrie.

Insbesondere weist die Transportvorrichtung 1 hierfür wenigstens ein, als geschlossene Schlaufe ausgebildete und in einer Umlaufrichtung U endlos umlaufend angetriebene Transportkette 3, 3', 3" auf, die beispielsweise als Transportriemen, Transportkette, Scharnierbandkette, Mattenkette oder andere, für den Transport des Stückgutes 2 geeignete Transportelemente, ausgebildet sein kann. Die Transportelemente 3 bilden jeweils mit ihrer oberen, sich gegen wenigstens eine in den Figuren nicht näher dargestellte Gleichführung abstützenden Länge die gemeinsame horizontale oder im Wesentlichen horizontale Transportebene oder -fläche aus, auf der das Stückgut 2 mit seinem Stückgutboden oder seinem Standboden aufsteht. Dabei können auch mehrere, beispielsweise zwei, drei, vier oder mehr Transportketten 3, 3', 3" vorgesehen sein, die mehrzügig, d.h. quer oder senkrecht zur Transportrichtung A einander benachbart angeordnet sind, sodass die mehreren Transportketten 3, 3', 3" zumindest mit einem Teil ihrer jeweils oberen Länge ihrer entsprechenden Schlaufe eine gemeinsame, beispielsweise horizontale Transportfläche in einer Transportebene TE ausbilden, auf der das Stückgut 2 mit seiner Bodenfläche zumindest teilweise aufstehen kann.

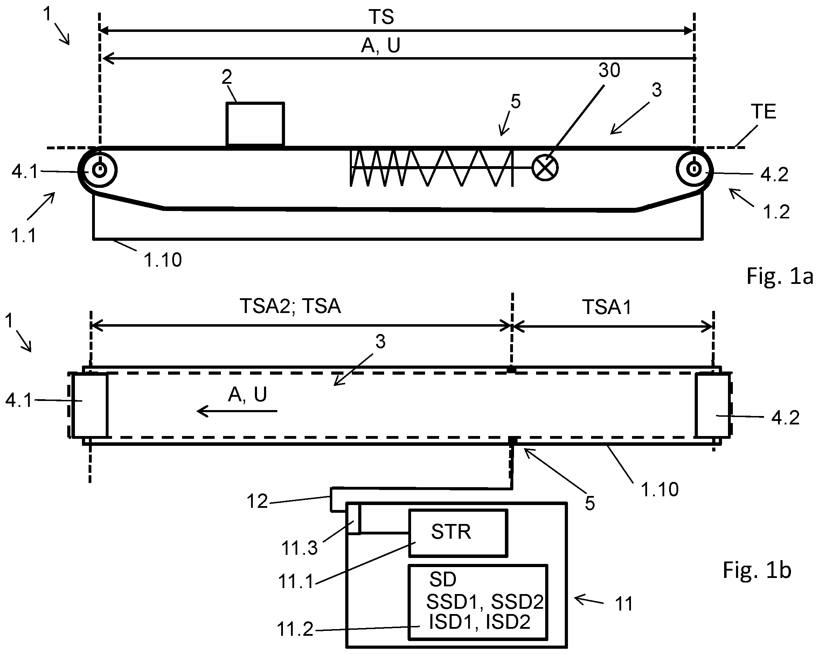

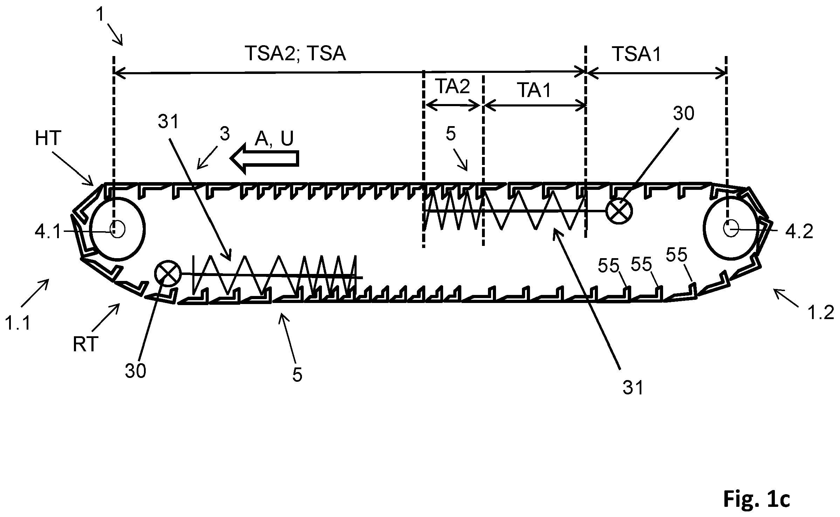

An dem bezogen auf die Transportrichtung A vorderen Ende 1.1 sowie bezogen auf die Transportrichtung A rückwärtigen Ende 1.2 ist die wenigstens eine Transportkette 3, 3', 3" jeweils über Umlenkeinrichtungen 4.1, 4.2 geführt, wobei die wenigstens eine Transportkette 3 insbesondere an ihrem vorderen Ende 1.1 über eine vordere Umlenkeinrichtung 4.1 und an ihrem rückwärtigen Ende 1.2 über eine rückwärtige Umlenkeinrichtung 4.2 geführt ist und sich zwischen der vorderen und der rückwärtigen Umlenkeinrichtung 4.1, 4.2 mittels der wenigstens einen Transportkette 3 eine Transportstrecke TS für das Stückgut 2 ausbildet (Figur 1). Die Transportstrecke TS, auf der die Stückgüter 2 befördert werden, ist also insbesondere von der rückwärtigen Umlenkeinrichtung 4.2 in Transportrichtung A bis zur vorderen Umlenkeinrichtung 4.1 ausgebildet. Die Umlaufrichtung U der wenigstens einen Transportkette 3 entspricht zumindest im Bereich der Transportstrecke TS der Transportrichtung A.

Dabei kann auch vorgesehen sein, dass die vordere und/oder die hintere Umlenkeinrichtung 4.1, 4.2 motorisch antreibbar ausgebildet ist. Beispielweise kann die vordere und/oder hintere Umlenkeinrichtung 4.1, 4.2 als Elektromotor, vorzugsweise als getriebeloser Elektromotor, beispielsweise in Form eines direkt angetriebenen Elektromotors, bevorzugt in Form eines Schrittmotors, eines Servomotors oder eines Torquemotors, ausgebildet sein. Die Umlenkeinrichtung 4.1, 4.2 kann hierfür einen innenliegenden, mit dem Maschinenrahmen 1.10 der Transportvorrichtung 1 drehfest verbundenen Stator und einen außenliegenden Rotor aufweisen. Letzterer kann bevorzugt bei Verwendung von Transportketten 3, 3', 3" an seiner Umfangsfläche mit einer Kettenverzahnung versehen sein, die eine senkrecht zur Transportrichtung A orientierte Motorachse konzentrisch umschließt. Der Rotor kann dabei insbesondere mit seiner entsprechenden Verzahnung die Wirkverbindung mit der wenigstens einen Transportkette 3 herstellen.

Die vordere und rückwärtige Umlenkreinrichtung 4.1, 4.2 befindet sich dabei insbesondere unterhalb der Transportebene TE angeordnet. Alternativ können die Umlenkeinrichtungen 4.1, 4.2 als Umlenkrollen ausgebildet sein, die sich drehbar gelagert an einem Maschinenrahmen 1.10 der Transportvorrichtung 1 angeordnet befinden.

Ferner ist zum Antreiben der wenigstens einen Transportkette 3 zwischen den Umlenkeinrichtungen 4.1, 4.2 mindestens eine Antriebsanordnung 5 vorgesehen, die entlang der Transportstrecke TS mit der wenigstens einen Transportkette 3, 3', 3" in Wirkverbindung steht. Beispielsweise können die jeweiligen Transportelementabschnitte 41, 41' der wenigstens einen Transportkette 3, 3', 3" an der der Transportebene TE abgewandten Unterseite jeweils zumindest einen Antriebsfinger 55 aufweisen, über die die entsprechenden Kettenglieder 41, 41' mit der mindestens einen Antriebsanordnung 5 in Wirkverbindung stehen. Die wenigstens eine Transportkette 3, 3', 3" weist mehrere drehbewegliche und relativ zueinander verschiebbar angeordnete Kettenglieder 41, 41' auf, so dass durch eine relative Verschiebung der einzelnen Kettenglieder 41, 41' zueinander die Auflagedichte/Mittlerer Abstand der Kettenglieder 41, 41' zueinander der jeweiligen Transportkette 3, 3', 3" veränderbar ist.

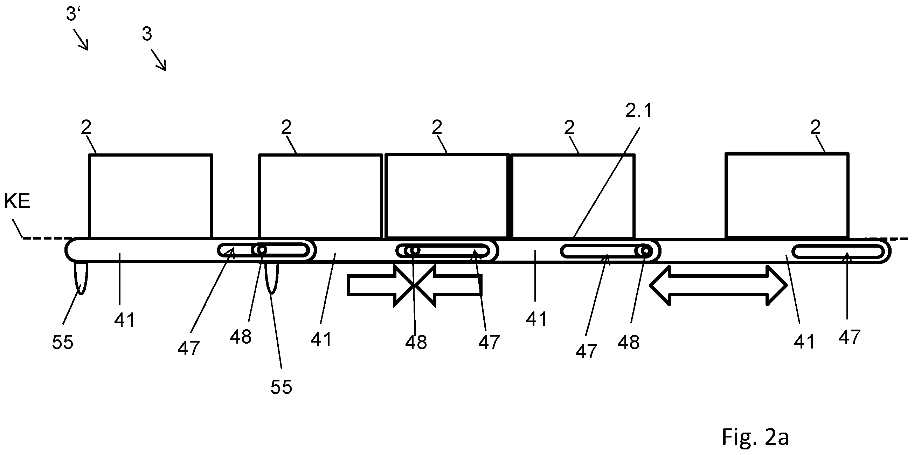

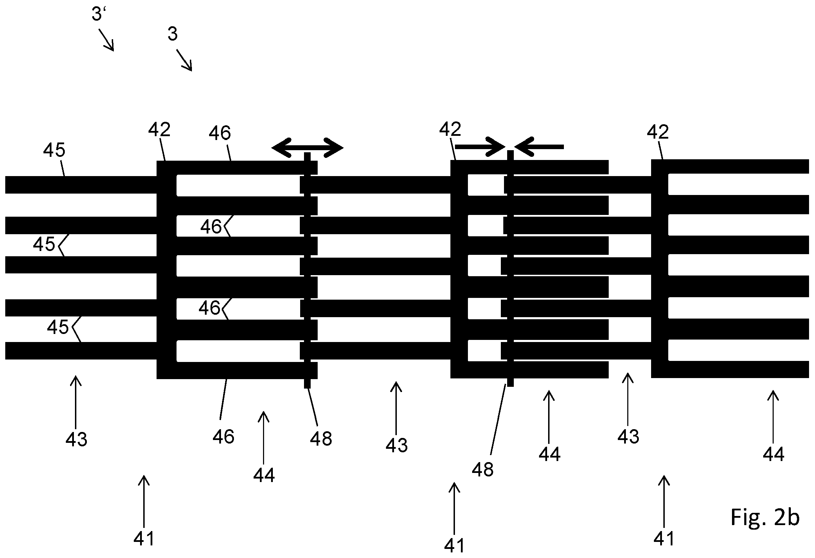

Die Figuren 2a und 2b zeigen beispielhaft in einer schematischen Seitenansicht bzw. Draufsicht eine Transportkette 3' für eine erfindungsgemäße Transportvorrichtung 1. Dabei weist die Transportkette 3' der Figuren 2a und 2b insbesondere mehrere drehbeweglich und relativ zueinander verschiebbar angeordnete Kettenglieder 41 auf, so dass durch eine relative Verschiebung der einzelnen Kettenglieder 41 zueinander die Auflagedichte/Mittlerer Abstand der Transportkette 3' variierbar bzw. veränderbar, also verlänger- als auch komprimierbar, ist. Insbesondere kann dabei die Transportkette 3' als Gliederkette 3 ausgebildet sein, die mehrere Kettenglieder 41 aufweist, die untereinander sowohl drehbeweglich als auch relativ zueinander verschiebbar angeordnet sind, derart, dass die Gesamtkettenlänge durch die relative Verschiebung der einzelnen Kettenglieder 41 zueinander variierbar, also verlängerbar als auch komprimierbar, ist. Die Schiebebeweglichkeit ist in den Figuren 2a und 2b auch durch entsprechende Pfeile gekennzeichnet, bzw. deutlich gemacht.

Mehr im Detail weisen die einzelnen Kettenglieder 41 jeweils einen sich länglich erstreckenden Trägerabschnitt 42 auf, an dem sich entlang seiner Längserstreckung beidseitig und jeweils um 180° abgewandt zueinander sowohl ein erster als auch ein zweiter gabelförmiger Kettengliedabschnitt 43, 44 abzweigt. Der erste Kettengliedabschnitt 43 ist dabei durch parallel zueinander angeordnete Kettengliederelemente 45 gebildet, während der zweite Kettengliedabschnitt 44 durch ebenfalls parallel zueinander angeordnete Kettengliederelemente 46 gebildet ist. Die Kettengliederelemente 45 des ersten Kettengliederabschnittes 43 sind zu den Kettengliederelementen 46 des zweiten Kettengliederabschnittes 44 entlang dem Trägerabschnitt 42 gegenseitig versetzt vorsehen, so dass die Kettengliederelemente 45 eines Kettengliedes 41 in die Kettengliederelemente 46 eines anderen Kettengliedes 41 einen Überlappungsabschnitt ausbilden können, in dem die Kettengliederelemente 45 des einen Kettengliedes 41 in die Kettengliederelemente 46 eines anderen Kettengliedes 41 kämmend eingreifen.

An der der Transportebene TE abgewandten Unterseite können einzelne oder aber auch alle Kettenglieder 41 zumindest einen fest an dem Kettenglied angeordneten Antriebsfinger 55 aufweisen. Beispielsweise kann an jedem oder an jedem zweiten oder an jedem dritten oder an jedem n-ten Kettenglied ein Antriebsfingern 55 angeordnet sein.

Dabei spannen die Kettengliederelemente 45 des ersten Kettengliedabschnittes 43 und die Kettengliederelemente 46 des zweiten Kettengliedabschnittes 44 letztlich eine gemeinsame Kettengliederebene KE auf, die mit der Transportebene TE zusammenfällt. In der dargestellten Ausführungsvariante der Figuren 2a und 2b sind dabei insbesondere 5 Kettengliederelemente 45 sowie 6 Kettengliederelemente 46 vorgesehen, die jeweils in gleichem oder annähernd gleichem Abstand und parallel zueinander an dem gemeinsamen Trägerabschnitt 42 angeordnet sind und damit ein einzelnes Kettenglied 41 ausbilden.

Wie insbesondere der Figur 2a entnehmbar, weisen die jeweiligen Kettenglieder 41, insbesondere deren jeweilige Kettengliederelemente 46 des zweiten Kettengliedabschnittes 44 vorzugsweise parallel der Kettengliederebene KE verlaufende Schlitze 47 in Form von Durchbrechungen auf, in denen ein an den Kettengliederelementen 45 des ersten Kettengliedabschnittes 43 angeordneter jeweiliger Bolzen 48 eingreift, der ebenfalls parallel der Kettengliederebene KE verlaufen kann. Insbesondere greift dabei der Bolzen 48 eines Kettengliedes 41 in die Schlitze 47 eines benachbarten Kettengliedes 41, derart, dass dadurch eine relative Verschiebung der einzelnen Kettenglieder 41 zueinander ermöglicht wird, indem die jeweiligen Bolzen 48 entlang der entsprechende Schlitze 47 verschoben werden. Letztlich wird durch diese relative Verschiebung der einzelnen Kettenglieder 41 zueinander die Gesamtlänge der Transportkette 3 veränderbar, also variierbar.

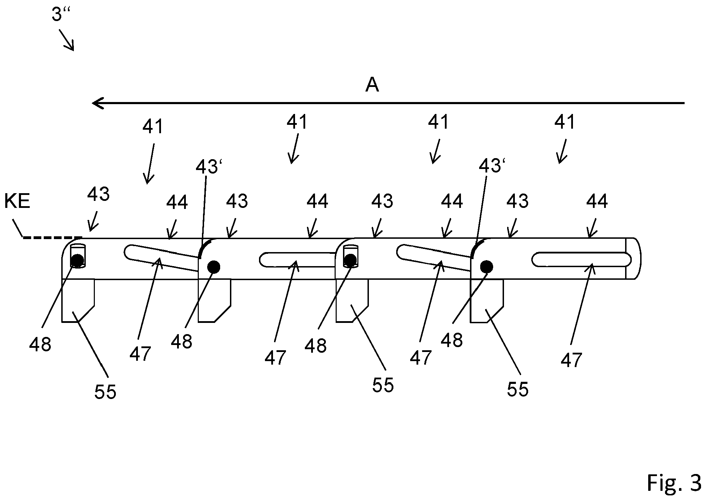

In Figur 3 ist eine weitere Ausführungsvariante einer Transportkette 3" in einer schematischen Seitenansicht gezeigt, die sich von der Transportkette 3' der Figuren 2a und 2b insbesondere dadurch unterscheidet, dass in Transportrichtung A gesehen jedes zweite Kettenglied 41 einen gerade verlaufenden Schlitz 47 aufweist, der jedoch gegenüber der Kettengliederebene KE geneigt ist, insbesondere einen spitzen Winkel zur Kettengliederebene KE aufweist. Die übrigen Schlitze 47 der weiteren Kettenglieder 41 sind in ihrer Längserstreckung, wie in den Figuren 2a und 2b dargestellt, parallel zur Kettengliederebene KE vorgesehenen.

Wird eine derart ausgebildete Transportkette 3" nun gestaucht, also zusammengeschoben, so werden die stirnseitigen Enden 43' des jeweiligen ersten Kettengliederabschnittes 43 eines Kettengliedes 41 mit einem parallel zur Kettengliederebene KE verlaufenden Schlitz 47 gegenüber einem Kettenglied 41 mit schräg verlaufendem Schlitz 47 angehoben, also nach oben ausgelenkt.

Dabei können die Kettenglieder 41, deren stirnseitige Enden 43' nach oben ausgelenkt werden, im Bereich der stirnseitigen Enden 43' einen gegenüber der restlichen Oberfläche des Kettengliedes 41 erhöhten Reibungskoeffizienten aufweisen. Beispielweise kann dies realisiert werden, indem ein derartiges Kettenglied 41 an seinen stirnseitigen Enden 43' eine Art Gummierung als Oberfläche aufweist. Besonders vorteilhaft wird damit auf der Transportkette 3" befördertes Stückgut 2 effektiv weitertransportiert.

Wie insbesondere aus den Figuren 1a bis c erkennbar, kann die Transportstrecke TS dabei wenigstens zwei Transportstreckenabschnitte TSA, nämlich einen ersten Transportstreckenabschnitt TSA1 und einen zweiten Transportstreckenabschnitt TSA2 aufweisen, die sich jeweils zwischen einer Umlenkeinrichtung 4.1, 4.2 und der mindestens einen Antriebsanordnung 5 und/oder sich zwischen zwei in Transportrichtung A aufeinander folgenden Antriebsanordnungen 5 erstrecken können.

Eine Besonderheit der Transportvorrichtung 1 besteht darin, dass ein sich in Umlaufrichtung U und/oder Transportrichtung A der Transportkette 3, 3', 3" mit Einlauf in die mindestens eine Antriebsanordnung 5 unmittelbar anschließender Transportstreckenabschnitt TSA mit zumindest einem Eingangsabschnitt TA1 und einem Ausgangsabschnitt TA2 vorgesehen ist, wobei die zumindest eine Antriebsanordnung 5 zur relativen Verschiebung der Kettenglieder 41, 41' zueinander im Eingangsabschnitt TA1 und im Ausgangsabschnitt TA2, zum Weiterfördern der Kettenglieder 41, 41' entlang des Transportstreckenabschnittes TSA mit gleichbleibendem relativen Abstand der Kettenglieder 41, 41' zueinander entlang des Eingangsabschnittes TA1 und des Ausgangsabschnittes TA2, sowie zum Antreiben der zumindest teilweise akkumulierten Kettenglieder 41, 41' im Eingangsabschnitt TA1 als auch im Ausgangsabschnitt TA2 ausgebildet ist.,

In der Ausführungsvariante der Figuren 1a bis 1c weist die Transportstrecke TS der Transportvorrichtung 1 den ersten und den zweiten Transportstreckenabschnitt TSA1 und TSA2 auf, wobei sich der zweite Transportstreckenabschnitt TSA2 unmittelbar benachbart in Umlaufrichtung U und/oder Transportrichtung A an den ersten Transportstreckenabschnitt TSA1 anschließt.

Mehr im Detail weist in dieser beispielhaften Ausführungsvariante der Figuren 1a bis 1c zumindest ein Transportstreckenabschnitt TSA, TSA1, TSA2, nämlich hier der zweite Transportstreckenabschnitt TSA2, die erfindungsgemäß ausgebildete Antriebsanordnung 5 auf, die in Umlaufrichtung U der Transportkette 3, 3', 3" gesehen unmittelbar anschließend an den ersten Transportstreckenabschnitt TSA 1 vorgesehen ist und dabei den Eingangsabschnitt TA1 und den Ausgangsabschnitt TA2 aufweist. Der Eingangsabschnitt TA1 beginnt dabei, in Umlaufrichtung A gesehen, unmittelbar nach dem Ende des ersten Transportstreckenabschnittes TSA1 - also mit Einlauf in den Eingangsabschnitt TA1 der mindestens einen Antriebsanordnung 5.

Durch die erfindungsgemäße Ausbildung der zumindest einen Antriebsanordnung 5 lassen sich folgende Betriebszustände BS1...BS4 der Transportkette 3, 3', 3" entlang des Eingangs- und Ausgangsabschnittes TA1, TA2 erzeugen:
In einem ersten Betriebszustand BS1 kann die Transportkette 3, 3', 3" gelängt, also mit einem maximal möglichen relativen Abstand zwischen zwei benachbarten Kettengliedern 41, 41' in den Eingangsabschnitt TA1 einlaufen und komprimiert, also in einem akkumulierten und damit minimal möglichen relativen Abstand benachbarter Kettenglieder 41, 41', aus dem Ausgangsabschnitt TA2 auflaufen. Hierbei findet eine relative, vorzugsweise kontinuierliche, Verschiebung der Kettenglieder 41, 41' zueinander, also eine kontinuierliche Akkumulation der Kettenglieder 41, 41', im Eingangsabschnitt TA1 und im Ausgangsabschnitt TA2 statt. Die auf der Transportebene TE beförderten Stückgüter 2 werden durch die Akkumulation der Kettenglieder 41, 41' in dem ersten Betriebszustand BS1 entlang des Eingangs- und Ausgangsabschnittes TA1, TA2 gepuffert, es findet also ein Pufferaufbau, also eine Aufstauung der Stückgüter 2, statt. Bevorzugt wird durch die Transportvorrichtung T jeweils mindestens ein Kettenglied gegen eine Anzahl von stillstehenden, bereits aufgestauten Kettengliedern geschoben, wobei bevorzugt jeder Stoß vermieden wird.

In einem zweiten Betriebszustand BS2 kann die Transportkette 3, 3', 3" akkumuliert, also mit einem minimal möglichen relativen Abstand zwischen zwei benachbarten Kettengliedern 41, 41' in den Eingangsabschnitt TA1 einlaufen und gelängt, also mit einem maximal möglichen relativen Abstand zwischen zwei benachbarten Kettengliedern 41, 41' aus dem Ausgangsabschnitt TA2 auflaufen. Hierbei findet eine relative, vorzugsweise kontinuierliche Verschiebung der Kettenglieder 41, 41' auseinander im Eingangsabschnitt TA1 und im Ausgangsabschnitt TA2 statt. Die auf der Transportebene TE beförderten Stückgüter 2 werden hierdurch in dem zweiten Betriebszustand BS2 entlang des Eingangs- und Ausgangsabschnittes TA1, TA2 entpuffert, es findet also ein Pufferabbau statt. Bevorzugt werden die Kettenglieder durch die in Umlaufrichtung und/oder Transportrichtung gesehen nachfolgende Transportvorrichtung 5 oder Umlenkvorrichtung aktiv gezogen.

In einem dritten Betriebszustand BS3 kann die Transportkette 3, 3', 3" gelängt, also mit einem maximal möglichen relativen Abstand zwischen zwei benachbarten Kettengliedern 41, 41' in den Eingangsabschnitt TA1 einlaufen und auch gelängt aus dem Ausgangsabschnitt TA2 wieder auflaufen. Hierbei findet keine relative Verschiebung der Kettenglieder 41, 41' zueinander im Eingangsabschnitt TA1 als auch im Ausgangsabschnitt TA2 statt. Die Kettenglieder 41, 41' werden also entlang Eingangsabschnittes TA1 und des Ausgangsabschnittes TA2 mit einem im Wesentlichen gleichbleibenden, nämlich maximal möglichen, Abstand zueinander gefördert. In dem dritten Betriebszustand BS3 findet auf der Transportebene TE ein reiner Transfer der beförderten Stückgüter 2 zwischen Eingangs- und Ausgangsabschnitt TA1, TA2 statt. Bevorzugt werden die Kettenglieder durch die in Umlaufrichtung und/oder Transportrichtung gesehen nachfolgende Transportvorrichtung 5 oder Umlenkvorrichtung aktiv gezogen.

In einem vierten Betriebszustand BS4 kann die Transportkette 3, 3', 3" akkumuliert, also mit einem minimal möglichen relativen Abstand zwischen zwei benachbarten Kettengliedern 41, 41' in den Eingangsabschnitt TA1 einlaufen und auch akkumuliert aus dem Ausgangsabschnitt TA2 wieder auflaufen. Hierbei findet keine relative Verschiebung der Kettenglieder 41, 41' zueinander im Eingangsabschnitt TA1 als auch im Ausgangsabschnitt TA2 statt. Die Kettenglieder 41, 41' werden also entlang Eingangsabschnittes TA1 und des Ausgangsabschnittes TA2 mit einem im Wesentlichen gleichbleibenden, nämlich minimal möglichen, Abstand zueinander gefördert. Auch in dem vierten Betriebszustand BS4 findet auf der Transportebene TE ein reiner Transfer der beförderten Stückgüter 2 zwischen Eingangs- und Ausgangsabschnitt TA1, TA2 statt. Bevorzugt wird durch die Transportvorrichtung T jeweils mindestens ein Kettenglied gegen eine Anzahl von stillstehenden, bereits aufgestauten Kettengliedern geschoben, wobei bevorzugt jeder Stoß vermieden wird.

Zudem ist die Antriebsanordnung 5 zum zumindest teilweisen Antreiben der bereits verschobenen, also zumindest teilweise akkumulierten Kettenglieder 41, 41' im Eingangsabschnitt TA1 als auch im Ausgangsabschnitt TA2 ausgebildet.

Werden in einem Betriebszustand die im Eingangsabschnitt TA1 bereits zumindest teilweise akkumulierten Kettenglieder in Umlaufrichtung U der Transportkette 3, 3', 3" weitergefördert, wodurch diese dann nicht stillstehen, kommt es auch bei einem Auflaufen der weiteren, in Umlaufrichtung U und/oder Transportrichtung gesehenen rückwärtig nachfolgenden Kettenglieder 41, 41' zu keinem (elastischen) Stoß auf die bereits gestauchten und sich nun im Eingangs- und Ausgangsabschnitt TA1, TA2 befindlichen, weitergeförderten Kettenglieder 41, 41'.

Hierbei werden die Kettenglieder 41, 41' der Transportkette 3, 3', 3" an den Eingangsabschnitt TA1 des Transportstreckenabschnittes TSA gelängt, also in ihrer ausgezogenen relativen Positionierung, angefördert, während des Durchlaufens der Eingangs- und Ausgangsabschnittes TA1, TA2 zusammengeschoben bzw. akkumuliert und in Umlaufrichtung U in ihrer gestauchten, also zusammengeschobenen relativen Positionierung, weitergefördert.

Dabei kann die Antriebsanordnung 5 unterhalb der Transportebene TE ebenfalls an dem Maschinenrahmen 1.10 angeordnet sein. Zur Ansteuerung der Antriebsanordnung 5 kann diese über eine Steuerleitung 12 mit einer Steuereinheit 11 in Wirkverbindung stehen.

Die erfindungsgemäße Transportvorrichtung 1 kann dabei einen, die Transportstrecke TS ausbildenden Hintrum HT sowie einen unterhalb des Hintrums HT verlaufenden Rücktrum RT aufweisen. Insbesondere erstreckt sich dabei der Hintrum HT zwischen der rückwärtigen Umlenkeinrichtung 4.2 in Transportrichtung A bzw. Umlaufrichtung U bis zur vorderen Umlenkeinrichtung 4.1 und bildet dabei die Transportstrecke TS aus, wo hingehen sich der Rücktrum RT zwischen der vorderen Umlenkeinrichtung 4.1 und der rückwärtigen Umlenkeinrichtung 4.2 erstreckt. Besonders vorteilhaft ist zumindest eine Antriebsanordnung 5dem Hintrum HT zugeordnet.

Zusätzlich kann vorgesehen sein, dass das Rücktrum RT eine weitere, zusätzliche Antriebsanordnung 5 aufweist. Hierbei kann auch vorgesehen sein, dass die vordere und/oder hintere Umlenkreinrichtung 4.1, 4.2 antreibbar, also als als Antriebanordnung 5 ausbildet sind.

Mehr im Detail erstreckt sich der erste Transportstreckenabschnitt TSA1 zwischen der hinteren als Antriebseinrichtung 5 ausgebildeten Umlenkeinrichtung 4.2 und dem Einlauf des Eingangsabschnitts TA1. Dabei kann sich der zweite Transportstreckenabschnitt TA2 bis maximal zu der in Umlaufrichtung U der Transportkette 3, 3', 3" folgenden nächsten Umlenkeinrichtung 4.1 oder zusätzlichen Antriebsanordnung 5 erstrecken.

Die Erfindung ist jedoch ausdrücklich nicht auf die in Figur 1 dargestellte Ausführungsvariante einer Anzahl von einer Antriebsanordnung 5 für die jeweilige Transportkette 3, 3', 3" beschränkt. Vielmehr ist es im Rahmen der vorliegenden Erfindung auch möglich, beispielsweise abhängig von der Dimensionierung der Transportvorrichtung 1, also insbesondere abhängig von der Länge der Transportstrecke TS oder der zu befördernden Masse des Stückgutes 2 oder aber auch der gewünschten geometrischen Ausgestaltung der Transportstrecke TS mit geradem oder kurvigem Verlauf, drei, vier, fünf oder mehr Antriebsanordnungen 5 für die jeweilige Transportkette 3 vorzusehen.

Gemäß der in den Figuren 1a bis 1c dargestellten Ausführungsvariante kann die Antriebanordnung 5 als Schneckenantrieb 30 mit zumindest einer motorisch angetriebenen Schnecke 31 ausgebildet sein, die mit der Transportkette 3, 3', 3" in Wirkverbindung steht, und diese insbesondere in Umlaufrichtung U und/oder Transportrichtung antreibt. Die Schnecke 31 steht dabei insbesondere mit den Antriebsfingern 55 der Transportkette 3, 3', 3" in Wirkeingriff.

Der Schneckenantrieb 30 weist dabei eine motorisch angetriebene Schnecke 31 auf, welche
- zur relativen Verschiebung der Kettenglieder 41, 41' zueinander im Eingangsabschnitt TA1 und im Ausgangsabschnitt TA2, und/oder
- zum Weiterfördern der Kettenglieder 41, 41' entlang des Transportstreckenabschnittes TSA mit gleichbleibendem relativen Abstand der Kettenglieder 41, 41' zueinander entlang des Eingangsabschnittes TA1 und des Ausgangsabschnittes TA2, und/oder
- zum Antreiben der bereits zumindest teilweise akkumulierten Kettenglieder 41, 41' im Eingangsabschnitt TA1 als auch im Ausgangsabschnitt TA2
dient.

Dabei weist die Schnecke 31 mindestens einen Gewindegang GA mit zwei Gewindegangabschnitten GAA1, GAA2 auf, wobei sich der erste Gewindegangabschnitt GAA1 in Umlaufrichtung U und/oder Transportrichtung gesehen entlang des Eingangsabschnitts TA1 und der zweite Gewindegangabschnitt GAA2 in Umlaufrichtung U und/oder Transportrichtung gesehen entlang des Ausgangsabschnitt TA2 erstreckt bzw. diesem zugeordnet ist.

In jedem der beiden Gewindegangabschnitte GAA1, GAA2 sind dabei eine erste Gewindesteigung GS1 des vollständig gelängten Transfers der Transportkette Transportkette 3, 3', 3" sowie eine zweite Gewindesteigung GS2 des vollständig akkumulierten Transfers der Transportkette 3, 3', 3" überlagert vorgesehen.

Mehr im Detail sind die erste und zweite Gewindesteigung GS1, GS2 entlang des jeweiligen Gewindegangabschnitts GAA1, GAA2 derart überlagert vorgesehen, dass die Bereiche entlang des jeweiligen Gewindegangabschnittes GAA1, GAA2, in denen sich die erste und zweite Gewindesteigung GS1, GS2 nicht schneiden, einen nutförmigen Freiraum zwischen der ersten und der zweiten Gewindesteigung GS1, GS2 in Form des Gewindegangabschnitt GGA1, GGA2 ausbilden, so dass sich die Antriebsfinger 55 der jeweiligen Kettenglieder 41, 41' in dem nutförmigen Freiraum zwischen der ersten und der zweiten Gewindesteigung GS1, GS2 frei bewegen können.

Die erste und zweite Gewindesteigung GS1, GS2 sind dabei derart aufeinander abgestimmt eingestellt, dass sich die beiden Gewindesteigungen GS1, GS2 zumindest in einem Übergangspunkt ÜP von dem ersten Gewindegangabschnitt GAA1 in den zweiten Gewindegangabschnitt GAA2 schneiden. Mithin ist also zwischen dem ersten und dem zweiten Gewindegangabschnitt GAA1, GAA2 ein Schnittpunkt SP der beiden Gewindesteigungen GS1, GS2 ausbildet.

Vorzugsweise aber nicht zwingend bildet der Schnittpunkt SP, bzw. Übergangspunkt ÜP eine Symmetrieachse SA für den ersten und zweiten Gewindegangabschnitt GAA1, GAA2 aus. Der erste und zweite Gewindegangabschnitt GAA1, GAA2 mit seiner jeweiligen ersten und zweiten Gewindesteigung GS1, GS2 sind dabei achsensymmetrisch zur Symmetrieachse SA ausgebildet.

Dabei verkleinert, insbesondere verjüngt, sich der zwischen der ersten und der zweiten Gewindesteigung GS1, GS2 in Form des Gewindegangabschnitt GGA1, GGA2 ausbildete Freiraum jeweils beidseitig von den freien Endabschnitten 31.1 der Schnecke 31 in Richtung der Symmetrieachse SA. Mehr im Detail verkleinert sich der zwischen der ersten und der zweiten Gewindesteigung GS1, GS2 in Form des Gewindegangabschnitts GGA1, GGA2 ausbildete Freiraum beginnend mit dem Einlauf in den Eingangsabschnitt TA1 in Umlaufrichtung U, und damit in Richtung des Ausgangsabschnittes TA2, und zwar bis zum Erreichen des Schnittpunktes SP.

Mit Erreichen des Schnittpunktes vergrößert sich der zwischen der ersten und der zweiten Gewindesteigung GS1, GS2 in Form des Gewindegangabschnitt GGA1, GGA2 ausbildete Freiraum wieder in Umlaufrichtung U bis zum Erreichen des Endes des Ausgangsabschnittes TA2.

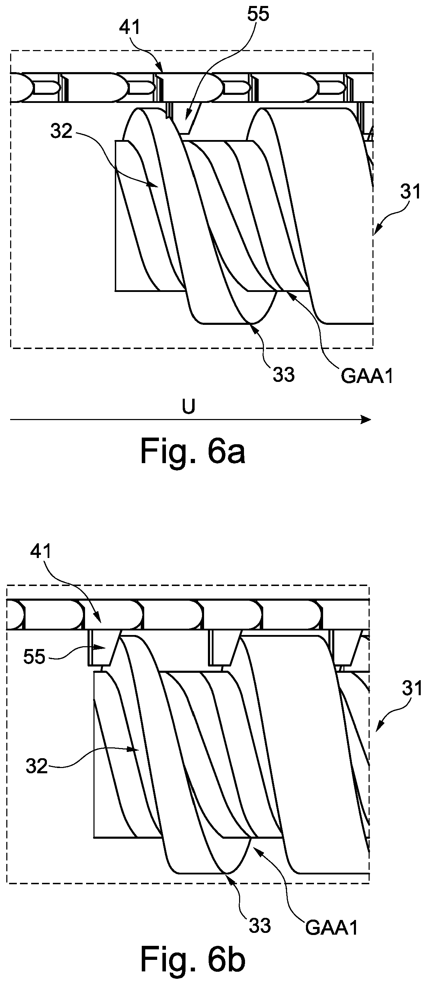

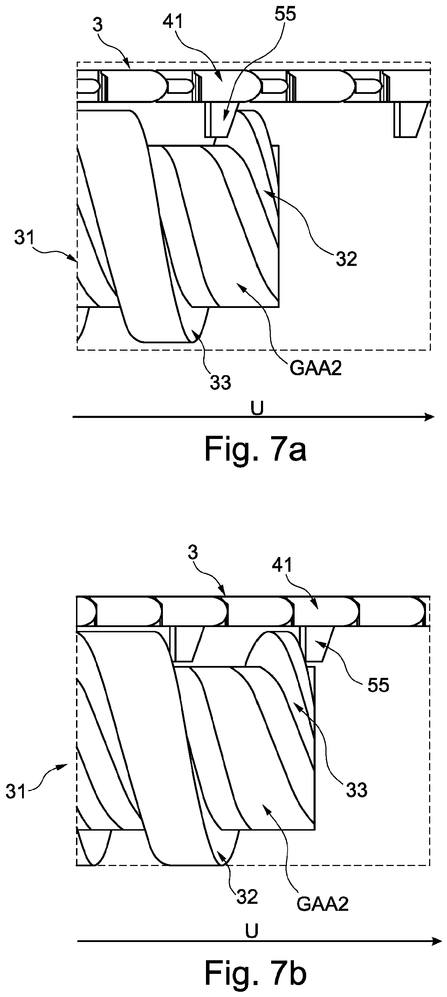

In Figuren 6a und 6b bzw. 7a und 7b ist jeweils ein Ausschnitt der Schnecke 31 in einer schematischen Seitenansicht gezeigt.

Mehr im Detail zeigen dabei die Figuren 6a und 6b den dem Eingangsabschnitt TA1 zugeordneten ersten Gewindegangabschnitt GAA1, während die Figuren 7a und 7b den dem Ausgangsabschnitt TA2 zugeordneten zweiten Gewindegangabschnitt GAA2 zeigen. Dabei zeigen die Figuren 6a und 6b die beiden möglichen Eingangszustände der Kettenglieder 41, 41' im Eingangsabschnitt TA1, nämlich Figur 6a den gelängten und Figur 6b den akkumulierten Betriebszustand. Vice Versa zeigen die Figuren 7a und 7b in Analogie dazu diese beiden Betriebszustände im Ausgangsabschnitt TA2 der Schnecke 31.

Wie die Figur 6a mehr im Detail zeigt, ist der nutförmige erste Gewindegangabschnitt GAA1 dabei durch eine vordere Flanke 32 und eine hintere Flanke 33 entlang des Eingangsabschnitts TA1 seitliche begrenzt, wobei die jeweils in Umlaufrichtung U und/oder Transportrichtung A der Transportkette gesehene hintere Flanke 33 die erste Gewindesteigung GS1 des vollständig gelängten Transfers der Transportkette 3, 3', 3". Entsprechend zeigt die Figur 6b mehr im Detail, dass die jeweils in Umlaufrichtung U und/oder Transportrichtung A der Transportkette gesehene vordere Flanke 32 die zweite Gewindesteigung GS2 des vollständig akkumulierten Transfers der Transportkette 3, 3', 3" aufweist.

Es versteht sich von selbst, dass die Gewindesteigungen für den Fall, dass nicht jedes einzelne Kettenglied mit jeweils einem eigenen Antriebsfinger 55 ausgestattet ist, stets an den gelängten oder gestauchten Abstand von zwei aufeinander folgenden Antriebsfingern 55 angepasst sind.

Symmetrisch dazu ist auch der nutförmige zweite Gewindegangabschnitt GAA2 durch eine vordere und hintere Flanke 32, 33 entlang des Ausgangsabschnitts TA2 seitliche begrenzt ausgebildet, wobei die jeweils in Umlaufrichtung U gesehene hintere Flanke 33 die zweite Gewindesteigung GS2 des vollständig akkumulierten Transfers der Transportkette 3, 3', 3" und die jeweils in Umlaufrichtung U gesehene vordere Flanke 32 die erste Gewindesteigung GS1 des vollständig gelängten Transfers der Transportkette 3, 3', 3" aufweist.

Wie aus der Figur 6a ersichtlich, ist die Transportvorrichtung 5 bevorzugt dazu vorgesehen, die gelängt in den Eingangsabschnitt TA1 einlaufende Transportkette 3, 3', 3" mit ihren Kettengliedern 41, 41' von der in Umlaufrichtung U gesehenen hinteren Flanke 33 des ersten Gewindegangabschnittes GAA1 an den Antriebsfingern 55 zu ziehen, also aktiv anzutreiben. Dagegen wird, wie aus der Figur 6b ersichtlich, die akkumuliert in den Eingangsabschnitt TA1 einlaufende Transportkette 3, 3', 3" mit ihren Kettengliedern 41, 41' von der in Umlaufrichtung U gesehenen vorderen Flanke 32 des ersten Gewindegangabschnittes GAA1 die Antriebsfinger 55 lediglich geführt.

Wie aus der Figur 7a ersichtlich wird die gelängt aus dem Ausgangsabschnitt TA2 auslaufende Transportkette 3, 3', 3" mit ihren Kettengliedern 41, 41' von der in Umlaufrichtung U gesehenen vorderen Flanke 32 des zweiten Gewindegangabschnittes GAA2 an den Antriebsfingern 55 lediglich geführt. Dagegen wird, wie aus der Figur 7b ersichtlich, die akkumuliert aus Ausgangsabschnitt TA2 auslaufende Transportkette 3, 3', 3" mit ihren Kettengliedern 41, 41' von der in Umlaufrichtung U und/oder Transportrichtung der Antriebskette gesehenen hintere Flanke 33 des zweiten Gewindegangabschnittes GAA2 über bzw. unter Verwendung der Antriebsfinger 55 geschoben, also aktiv angetrieben.

Die Ansteuerung der der Antriebsanordnung 5 kann dabei über die Steuereinheit 11 erfolgen, die beispielsweise die Maschinensteuerung oder ein Teil der Maschinensteuerung der Transportvorrichtung 1 oder einer die Transportvorrichtung 1 aufweisenden Anlage ist. Insbesondere kann zumindest eine Antriebsanordnung 5 in Abstimmung mit der vorderen und/oder hinteren Umlenkeinrichtung 4.1, 4.2 mittels der Steuereinheit 11 gesteuert und/oder geregelt werden.

In einer Ausführungsvariante kann dabei vorgesehen sein, dass die Prozesseinrichtung 11.1 dazu eingerichtet ist, die jeweilige Antriebsanordnung mit der vorderen und/oder hinteren Umlenkeinrichtung 4.1, 4.2 in einer Master-Slave-Kopplung zu betreiben. Beispielsweise kann die Antriebsanordnung 5 mit der vorderen und/oder hinteren Umlenkeinrichtung 4.1, 4.2 in einer Master-Slave-Kopplung betrieben werden, indem beispielsweise die die motorisch angetriebene hintere Umlenkeinrichtung 4.2 mittels der Steuereinheit 11 als Master, also Leitantrieb, und die Antriebsanordnung 5 mittels der Steuereinheit 11 einen mit dem Master gekoppelten Slave, also Folgeantrieb, ausbildet.

Beispielsweise kann die Ansteuerung der Antriebsanordnung 5 sowie der vorderen und/oder hinteren Umlenkeinrichtung 4.1, 4.2 durch eine Steuerroutine STR gesteuert erfolgen, die in der Steuereinheit 11 ausgeführt wird. Die Steuereinheit 11 kann hierzu beispielsweise wenigstens eine Prozessoreinheit 11.1 zur Ausführung der Steuerroutine STR aufweisen. Ferner weist die Steuereinheit 11 beispielsweise eine mit der Prozessoreinheit 11.1 zusammenwirkende Speichereinheit 11.2 zum zumindest zeitweisen Speichern Steuerungsdaten SD auf, die beispielsweise über eine Schnittstelle 11.3 von der Steuereinheit 11 über die Steuerleitungen 12 an die Antriebsanordnung 5 sowie die vordere und/oder hintere Umlenkeinrichtung 4.1, 4.2 übertragen und/oder empfangen werden.

Die Steuerdaten SD umfassen dabei zumindest aktuell an der als Master und/oder Slave ausgebildeten Antriebsanordnung 5, die als Ist-Steuerdaten ISDM, ISDS wie beispielsweises eine jeweilige Ist-Drehzahl IDZM, IDZS, Ist-Drehrichtung IDRM, IDRS, Ist-Drehwinkel IDWM, IDWS sowie Ist-Drehmoment IDMM, IDMS, sowie entsprechende Soll-Steuerdaten SSDM, SSDS wie beispielsweise eine Soll-Drehzahl SDZM, SDZS, Soll-Drehrichtung SDRM, SDRS, Soll-Drehwinkel SDWM, SDWS sowie Soll-Drehmoment SDMM, SDMS ermittelt werden. Dabei sind die mit Index M versehenen Parameter die des Masters, beispielsweise die der hinteren motorisch angetriebenen Umlenkeinrichtung 4.2, und die Index S versehenen Parameter die das Slaves, beispielsweise die der zumindest einen Antriebsanordnung 5 zuzuordnen Parameter.

Insbesondere kann die Prozesseinheit 11.1 dazu eingerichtet sein, die Ist-Steuerdaten ISD aus dem Nennstrom zu ermitteln, der zum Betreiben der jeweiligen Antriebanordnung 5 sowie der vorderen und/oder hinteren Umlenkeinrichtung 4.1, 4.2 notwendig ist, um eine entsprechende Antriebsbewegung mittels der wenigstens einen Transportkette 3 zu erzeugen. Auch kann aus der zeitlichen Änderung des Nennstromes und/oder der Leistungsaufnahme bzw. dessen zeitlichen Änderung der Leistungsaufnahme der zumindest einen Antriebanordnung 5 sowie der vorderen und/oder hinteren Umlenkeinrichtung 4.1, 4.2 auf die von der wenigstens einen Transportkette 3 erzeugte Antriebsbewegung geschlossen werden.

Die Prozessoreinheit 11.1 ist insbesondere dazu eingerichtet, über die Schnittstelle 12.3 empfangene Ist-Steuerdaten ISD mit Soll-Steuerdaten SSD zu vergleichen und abhängig davon in Steuerdaten SD für die Steuerroutine STR umzuwandeln, bzw. Steuerbefehle zu definieren, die an die entsprechende Antriebsanordnung 5 sowie die vordere und/oder hintere Umlenkeinrichtung 4.1, 4.2 des entsprechenden Transportstreckenabschnittes TSA übertragen werden, um den jeweiligen Transportportstreckenabschnitt TSA abhängig von den mittels der Steuerroutine STR erzeugten Steuerdaten SD gesteuert anzutreiben. In der Speichereinheit 10.2 können auch bereits vordefinierte, also vorgegebene, Soll-Steuerdaten SSD hinterlegt sein.

Sind mehrere erfindungsgemäß ausgebildete Transportstreckenabschnitte TSA vorgesehen, kann jeder Transportstreckenabschnitt TSA mittels der ihm zugeordneten Antriebsanordnung 5 und/oder antreibbaren Umlenkeinrichtung 4.1, 4.2 betrieben werden und das insbesondere in Abhängigkeit zu den weiteren vorgesehenen Antriebsordnungen 5 und/oder antreibbaren Umlenkeinrichtungen 4.1, 4.2 abgestimmten Soll-Steuerungsdaten SSD, also beispielsweise Soll-Drehzahl SDZ, Soll-Drehwinkel SDW oder Soll-Drehmoment SDM. Insbesondere wird die zumindest eine Antriebsanordnung 5 in Abhängigkeit der Antriebgeschwindigkeit der dieser zumindest eine Antriebsanordnung 5 in Umlaufrichtung U gesehen unmittelbar vorgeordneten und/oder nachgeordneten weiteren Antriebseinrichtung 5 und/oder oder antreibbaren Umlenkeinrichtungen 4.1, 4.2 betrieben.

Beispielsweise kann vorgesehen, dass die Transportstreckenabschnitte TSA in Abstimmung zueinander mit gleichen und/oder unterschiedlichen Soll-Steuerungsdaten SSD, beispielsweise einer unterschiedlichen Soll-Drehzahl SDZ, mittels der Steuereinheit 11 angesteuert werden.

Für einen ersten Betriebszustand BS1 kann beispielsweise die hintere Umlenkeinrichtung 4.2 mit einer größeren Fördergeschwindigkeit betrieben werden als die zumindest eine Antriebanordnung 5, so dass die entlang TSA1 und des Eingangs- und Ausgangsabschnittes TA1, TA2 geförderten Stückgüter 2 zumindest auf TSA1 und TA1 und TA2 gepuffert werden.

Liegt weiterhin eine entsprechend geringe Fördergeschwindigkeit der vorderen Umlenkeinrichtung 4.1 vor, beispielsweise eine Geschwindigkeit kleiner als die Fördergeschwindigkeit der zumindest einen Antriebsanordnung 5, so können die Stückgüter 2 auch auf TSA2 gepuffert werden.

Für einen zweiten Betriebszustand BS2 kann beispielsweise die hintere Umlenkeinrichtung 4.2 mit einer geringeren Fördergeschwindigkeit betrieben werden als die zumindest eine Antriebsanordnung 5, so dass zumindest die entlang des Eingangsabschnittes TA1 geförderten Stückgüter 2 entpuffert werden, also ein Pufferabbau erfolgt.

Für einen dritten und vierten Betriebszustand BS3, BS4 kann beispielsweise die hintere Umlenkeinrichtung 4.2 mit einer Fördergeschwindigkeit betrieben werden, die der Fördergeschwindigkeit der zumindest einen Antriebanordnung 5 entspricht, so dass die entlang des Eingangs- und Ausgangsabschnittes TA1, TA2 geförderten Stückgüter 2 in einem reinen Transfer befördert werden
Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird. Insbesondere können unterschiedliche Varianten der Antriebseinheiten aus den vorstehenden Ausführungsbeispielen in geeigneter Weise kombiniert werden.

Von besonderem Vorteil ist es, wenn bei Transportvorrichtungen, die eine bestimmte Breite überschreiten, immer zwei Antriebsanordnungen 5 parallel oder nebeneinander angeordnet sind, so dass auch bei solchen, also breiten Transportvorrichtungen, alle die Transportfläche bildenden Transportketten parallel und gleichmäßig und ohne seitlichen Versatz angetrieben werden.

Weiterhin ist es von großen Vorteil, wenn die Antriebsanordnungen so flach und schmal ausgeführt werden, dass diese innerhalb der Transportvorrichtung 1 angeordnet werden können. Mehr im Detail so flach, dass die Antriebsanordnungen zwischen Hintrum und Rücktrum der Transportkette angeordnet werden können. Und so schmal, dass zumindest eine bevorzugt aber zwei Antriebsanordnungen nebeneinander zwischen den oder innerhalb der Seitenwände(n) der Transportvorrichtung angeordnet werden können.

Im Rahmen der vorliegenen Anmeldung wird die Formulierung "in Umlaufrichtung U und/oder Transportrichtung A" verwendet. Dabei ist stets die Anordnung der Antriebsanordnung zu berücksichtigen und auch, ob die Antriebsanordnung auf den Hintrum oder den Rücktrum der Transportkette wirkt.

Der Inhalt der Patentansprüche wird zu einem Bestandteil der Beschreibung gemacht.

### Bezugszeichenliste

- 1: Transportvorrichtung
- 1.1: vorderes Ende
- 1.2: rückwärtiges Ende
- 1.10: Maschinenrahmen
- 2: Stückgut
- 3, 3', 3": Transportkette
- 3.1: Magnet
- 4.1: vordere Umlenkreinrichtung
- 4.2: rückwärtige Umlenkeinrichtung
- 5: Antriebsanordnung

- 11: Steuereinheit
- 11.1: Prozesseinheit
- 11.2: Speichereinheit
- 11.3: Schnittstelle
- 12: Steuerleitung

- 30: Schneckenantrieb
- 31: Schnecke
- 32: vordere Flanke
- 33: hintere Flanke

- 41, 41': Kettenglied
- 42: Trägerabschnitt
- 43: erster Kettengliedabschnitt
- 44: zweiter Kettengliedabschnitt
- 45: Kettengliederelement
- 46: Kettengliederelement
- 47: Schlitz
- 48: Bolzen
- 49: erstes Kettengliedsegment
- 50: zweites Kettengliedsegment
- 51: Kettengliedelement
- 52: Kettengliedelement
- 53: Schlitz
- 54: Bolzen
- 55: Antriebsfinger

- A: Transportrichtung
- BS1...BS4: erster bis vierter Betriebszustand
- GA: Gewindegang
- GAA1, GAA2: erster und zweiter Gewindegangabschnitt
- GS1, GS2: erste und zweite Gewindesteigung
- TS: Transportstrecke
- TE: Transportebene
- TA1: Eingangsabschnitt
- TA2: Ausgangsabschnitt
- TSA: Transportstreckenabschnitt
- TSA1: erster Transportstreckenabschnitt
- TSA2: zweiter Transportstreckenabschnitt
- KE: Kettengliederebene
- HT: Hintrum
- RT: Rücktrum
- U: Umlaufrichtung
- ÜP: Übergangspunkt
- STR: Steuerroutine
- SD: Steuerungsdaten
- ISD1; ISD2: Ist-Steuerdaten
- IDZ1, IDZ2: Ist-Drehzahl
- IDR1, IDR2: Ist-Drehrichtung
- IDW1, IDW2: Ist-Drehwinkel
- IDM1, IDM2: Ist-Drehmoment
- SSD1, SSD2: Soll-Steuerungsdaten
- SDZ1, SDZ2: Soll-Drehzahl
- SDR1, SDR2: Soll-Drehrichtung
- SDW1, IDW2: Soll-Drehwinkel
- SDM1, SDM2: Soll-Drehmoment

## Patentansprüche

1. Transportvorrichtung (1) zum Transportieren von Stückgut (2) in einer Transportrichtung (A) mit wenigstens einer, eine geschlossene Schlaufe bildenden und in einer Umlaufrichtung (U) und/oder Transportrichtung A umlaufend angetriebenen Transportkette (3, 3', 3"), die zur Ausbildung jeweils einer geschlossenen Schlaufe über eine bezogen auf die Transportrichtung (A) vordere Umlenkeinrichtung (4.1) sowie über eine bezogen auf die Transportrichtung (A) rückwärtige Umlenkeinrichtung (4.2) geführt ist, wobei die Transportvorrichtung (1) zwischen der vorderen und der rückwärtigen Umlenkeinrichtung (4.1, 4.2) mittels der wenigstens einen Transportkette (3, 3', 3") eine Transportstrecke (TS) für das Stückgut (2) ausbildet, wobei zum Antreiben der wenigstens einen Transportkette (3, 3', 3") zwischen den Umlenkeinrichtungen (4.1, 4.2) mindestens eine Antriebsanordnung (5) vorgesehen ist, die entlang der Transportstrecke (TS) mit der wenigstens einen Transportkette (3, 3', 3") in Wirkverbindung steht, wobei die wenigstens eine Transportkette (3, 3', 3") mehrere drehbewegliche und relativ zueinander verschiebbar angeordnete Kettenglieder(41, 41') aufweist, wobei ein sich in Umlaufrichtung (U) und/oder Transportrichtung der Transportkette (3, 3', 3") mit Einlauf in die mindestens eine Antriebsanordnung (5) unmittelbar anschließender Transportstreckenabschnitt (TSA) mit zumindest einem Eingangsabschnitt (TA1) und einem Ausgangsabschnitt (TA2) vorgesehen ist, wobei die zumindest eine Antriebsanordnung (5) zur relativen Verschiebung der Kettenglieder (41, 41') zueinander im Eingangsabschnitt (TA1) und im Ausgangsabschnitt (TA2), zum Weiterfördern der Kettenglieder (41, 41') entlang des Transportstreckenabschnittes (TSA) mit gleichbleibendem relativen Abstand der Kettenglieder (41, 41') zueinander entlang des Eingangsabschnittes (TA1) und des Ausgangsabschnittes (TA2), sowie zum Antreiben der zumindest teilweise akkumulierten Kettenglieder (41, 41') im Eingangsabschnitt (TA1) als auch im Ausgangsabschnitt (TA2) ausgebildet ist, wobei die zumindest eine Antriebsanordnung (5) als Schneckenantrieb (30) mit zumindest einer motorisch angetriebenen Schnecke (31) ausgebildet ist, und wobei die Schnecke (31) mindestens einen Gewindegang (GA) mit zwei Gewindegangabschnitten (GAA1, GAA2) aufweist, wobei der erste Gewindegangabschnitt (GAA1) in Umlaufrichtung (U) gesehen entlang des Eingangsabschnitts (TA1) und der zweite Gewindegangabschnitt (GAA2) in Umlaufrichtung (U) gesehen entlang des Ausgangsabschnitt (TA2) vorgesehen ist, **dadurch gekennzeichnet, dass** in jedem der beiden Gewindegangabschnitte (GAA1, GAA2) eine erste Gewindesteigung (GS1) des vollständig gelängten Transfers der Transportkette (3, 3', 3") sowie eine zweite Gewindesteigung (GS2) des vollständig akkumulierten Transfers der Transportkette (3, 3', 3") überlagert vorgesehen sind.

2. Transportvorrichtung (1) nach Anspruch 1, **dadurch gekennzeichnet, dass** die zumindest eine Antriebsanordnung (5) dazu ausgebildet ist, zumindest vier unterschiedliche Betriebszustände (BS1... BS4) der Transportkette (3, 3', 3") entlang des Eingangs- und Ausgangsabschnittes (TA1, TA2) zu erzeugen.

3. Transportvorrichtung (1) nach einem der vorangehenden Ansprüche, **dadurch gekennzeichnet, dass** zumindest eine Antriebsanordnung (5) dazu ausgebildet ist, einen ersten Betriebszustand (BS1) zu erzeugen, bei dem die Transportkette (3, 3', 3") gelängt in den Eingangsabschnitt (TA1) einläuft und komprimiert aus dem Ausgangsabschnitt (TA2) aufläuft.

4. Transportvorrichtung (1) nach einem der vorangehenden Ansprüche, **dadurch gekennzeichnet, dass** zumindest eine Antriebsanordnung (5) dazu ausgebildet ist, einen zweiten Betriebszustand (BS2) zu erzeugen, bei dem die Transportkette (3, 3', 3") akkumuliert in den Eingangsabschnitt (TA1) einläuft und gelängt aus dem Ausgangsabschnitt (TA2) auflaufen.

5. Transportvorrichtung (1) nach einem der vorangehenden Ansprüche, **dadurch gekennzeichnet, dass** zumindest eine Antriebsanordnung (5) dazu ausgebildet ist, einen dritten Betriebszustand (BS3) zu erzeugen, bei dem die Transportkette (3, 3', 3") gelängt in den Eingangsabschnitt (TA1) einläuft und gelängt aus dem Ausgangsabschnitt (TA2) wieder aufläuft.

6. Transportvorrichtung (1) nach einem der vorangehenden Ansprüche, **dadurch gekennzeichnet, dass** zumindest eine Antriebsanordnung (5) dazu ausgebildet ist, einen vierten Betriebszustand (BS4) zu erzeugen, bei dem die Transportkette (3, 3', 3") akkumuliert in den Eingangsabschnitt (TA1) einläuft und akkumuliert aus dem Ausgangsabschnitt (TA2) wieder aufläuft.

7. Transportvorrichtung (1) nach Anspruch 6, **dadurch gekennzeichnet, dass** die erste und zweite Gewindesteigung (GS1, GS2) entlang des jeweiligen Gewindegangabschnitts (GAA1, GAA2) derart überlagert vorgesehen sind, dass die Bereiche entlang des jeweiligen Gewindegangabschnittes (GAA1, GAA2), in denen sich die erste und zweite Gewindesteigung (GS1, GS2) nicht schneiden, einen nutförmigen Freiraum zwischen der ersten und der zweiten Gewindesteigung (GS1, GS2) in Form des entsprechenden Gewindegangabschnitts (GGA1, GGA2) ausbilden.

8. Transportvorrichtung (1) nach einem der vorangehenden Ansprüche, **dadurch gekennzeichnet, dass** eine erste und eine zweite Gewindesteigung (GS1, GS2) derart aufeinander abgestimmt eingestellt ist, dass sich die beiden Gewindesteigungen (GS1, GS2) zumindest in einem Schnittpunkt (SP) von dem ersten Gewindegangabschnitt (GAA1) in den zweiten Gewindegangabschnitt (GAA2) schneiden, der mit einem Übergabepunkt (ÜP) von dem Eingangsabschnitt (TA1) zum Ausgangsabschnitt (TA2) zusammenfällt.

9. Transportvorrichtung (1) nach einem der vorangehenden Ansprüche, **dadurch gekennzeichnet, dass** der erste und zweite Gewindegangabschnitt (GAA1, GAA2) mit seiner jeweiligen ersten und zweiten Gewindesteigung (GS1, GS2) jeweils achsensymmetrisch zu einer Symmetrieachse (SA) ausgebildet ist.

10. Transportvorrichtung (1) nach einem der vorangehenden Ansprüche, **dadurch gekennzeichnet, dass** der erste Gewindegangabschnitt (GAA1) durch eine vordere und hintere Flanke (32, 33) entlang des Eingangsabschnitts (TA1) seitlich begrenzt ist, wobei die jeweils in Umlaufrichtung (U) gesehene hintere Flanke (33) die erste Gewindesteigung (GS1) und die jeweils in Umlaufrichtung (U) gesehene vordere Flanke (32) die zweite Gewindesteigung (GS2) aufweist.

11. Transportvorrichtung (1) nach einem der vorangehenden Ansprüche, **dadurch gekennzeichnet, dass** der zweite Gewindegangabschnitt (GAA2) durch die vordere und hintere Flanke (32, 33) entlang des Ausgangsabschnitts (TA2) seitliche begrenzt ist, wobei die jeweils in Umlaufrichtung (U) gesehene hintere Flanke (33) die zweite Gewindesteigung (GS2) und die jeweils in Umlaufrichtung (U) gesehene vordere Flanke (32) die erste Gewindesteigung (GS1) aufweist.

12. Verwendung einer Transportvorrichtung (1) gemäß einem der Ansprüche 1 bis 11 zum Transportieren von Stückgut (2) in wenigstens einer Transportrichtung (A) zwischen Behälterbehandlungsmaschinen und/oder Überschubstationen und/oder Transferstationen und/oder Überleitstationen und/oder einem Schrumpftunnel und/oder einer Palettiervorrichtung für die Verpackungs- und Getränkeindustrie.

## Claims

1. Transport device (1) for transporting piece goods (2) in a transport direction (A) with at least one conveyor chain (3, 3`, 3") forming a closed loop and driven in a circulating direction (U) and/or transport direction (A), which is guided to form in each case a closed loop over a front deflection device (4.1) relative to the transport direction (A) and over a rear deflection device (4.2) relative to the transport direction (A), wherein the transport device (1) forms a transport path (TS) for the piece goods (2) between the front and the rear deflection device (4.1, 4.2) by means of the at least one conveyor chain (3, 3`, 3"), wherein to drive the at least one conveyor chain (3, 3`, 3") between the deflection devices (4.1, 4.2) at least one drive assembly (5) is provided, which along the transport path (TS) is in functional connection with the at least one conveyor chain (3, 3`, 3"), wherein the at least one conveyor chain (3,3`,3") has a plurality of rotationally movable chain links (41, 41`) arranged such that they can be shifted relative to each other, wherein a directly contiguous transport path section (TSA) in the circulating direction (U) and/or transport direction of the conveyor chain (3, 3`,3") running into the at least one drive assembly (5) is provided with at least one inlet section (TA1) and one outlet section (TA2), wherein the at least one drive assembly (5) is configured to shift the chain links (41, 41`) relative to each other in the inlet section (TA1) and in the outlet section (TA2), to further transport the chain links (41, 41`) along the transport path section (TSA) with a constant relative distance of the chain links (41, 41`) to each other along the inlet section (TA1) and the outlet section (TA2), and to drive the at least partly accumulated chain links (41, 41`) in the inlet section (TA1) and also in the outlet section (TA2), wherein the at least one drive assembly (5) is configured as a worm drive (30) with at least one motor-driven worm (31), and wherein the worm (31) has at least one thread flight (GA) with two thread flight sections (GAA1, GAA2), wherein the first thread flight section (GAA1) seen in the circulating direction (U) is provided along the inlet section (TA1) and the second thread flight section (GAA2) seen in the circulating direction (U) along the outlet section (TA2), **characterised in that** in each of the two thread flight sections (GAA1, GAA2) a first thread pitch (GS1) of the fully completed transfer of the conveyor chain (3, 3`, 3") and a second thread pitch (GS2) of the fully accumulated transfer of the conveyor chain (3, 3`, 3") are provided in an overlapping manner.

2. Transport device (1) according to claim 1, **characterised in that** the at least one drive assembly (5) is configured to generate at least four different operating statuses (BS1 ... BS4) of the conveyor chain (3, 3`, 3") along the inlet and outlet section (TA1, TA2).

3. Transport device (1) according to one of the previous claims, **characterised in that** at least one drive assembly (5) is configured to generate a first operating status (BS1), in which the conveyor chain (3, 3`, 3") enters the inlet section (TA1) in an extended state and emerges from the outlet section (TA2) in a compressed state.

4. Transport device (1) according to one of the previous claims, **characterised in that** at least one drive assembly (5) is configured to generate a second operating status (BS2), in which the conveyor chain (3, 3`, 3") enters the inlet section (TA1) in an accumulated state and emerges from the outlet section (TA2) in an extended state.

5. Transport device (1) according to one of the previous claims, **characterised in that** at least one drive assembly (5) is configured to generate a third operating status (BS3), in which the conveyor chain (3, 3`, 3") enters the inlet section (TA1) in an extended state and emerges from the outlet section (TA2) again in an extended state.

6. Transport device (1) according to one of the previous claims, **characterised in that** at least one drive assembly (5) is configured to generate a fourth operating status (BS4), in which the conveyor chain (3, 3`, 3") enters the inlet section (TA1) in an accumulated state and emerges from the outlet section (TA2) again in an accumulated state.

7. Transport device (1) according to claim 6, **characterised in that** the first and second thread pitch (GS1, GS2) are provided along the particular thread flight section (GAA1, GAA2) in an overlapping manner such that the areas along the particular thread flight section (GAA1, GAA2), in which the first and second thread pitch (GS1, GS2) do not intersect, form a groove-shaped space between the first and the second thread pitch (GS1, GS2) in the form of the corresponding thread flight section (GGA1, GGA2).

8. Transport device (1) according to one of the previous claims, **characterised in that** a first and a second thread pitch (GS1, GS2) are adjusted relative to each other such that the two thread pitches (GS1, GS2) intersect at least at one intersection point (SP) from the first thread flight section (GAA1) to the second thread flight section (GAA2), which coincides with a transfer point (UP) from the inlet section (TA1) to the outlet section (TA2).

9. Transport device (1) according to one of the previous claims, **characterised in that** the first and second thread flight section (GAA1, GAA2) with in each case its first and second thread pitch (GS1, GS2) is formed in each case axially symmetrically relative to a symmetry axis (SA).

10. Transport device (1) according to one of the previous claims, **characterised in that** the first thread flight section (GAA1) is laterally limited by a front and a rear flank (32, 33) along the inlet section (TA1), wherein the rear flank (33) in each case seen in the circulating direction (U) has the first thread pitch (GS1) and the front flank (32) in each case seen in the circulating direction (U) has the second thread pitch (GS2).

11. Transport device (1) according to one of the previous claims, **characterised in that** the second thread flight section (GAA2) is laterally limited by the front and rear flank (32, 33) along the outlet section (TA2), wherein the rear flank (33) in each case seen in the circulating direction (U) has the second thread pitch (GS2) and the front flank (32) in each case seen in the circulating direction (U) has the first thread pitch (GS1).

12. Transport device (1) according to one of the claims 1 to 11 for transporting piece goods (2) in at least one transport direction (A) between container handling machines and/or transfer stations and/or transfer modules and/or handover stations and/or a shrink tunnel and/or a palletisation device for the packing and drinks industry.

## Revendications

1. Dispositif de transport (1) pour le transport de marchandises en vrac (2) dans une direction de transport (A) avec au moins une chaîne de transport (3, 3', 3") formant une boucle fermée et entraînée en rotation dans une direction périphérique (U) et/ou dans une direction A, qui est guidée par un système de renvoi avant (4.1) par rapport à la direction de transport (A) ainsi que par un système de renvoi arrière (4.2) par rapport à la direction de transport (A) pour former respectivement une boucle fermée, dans lequel le dispositif de transport (1) forme, au moyen de l'au moins une chaîne de transport (3, 3', 3"), un tronçon de transport (TS) pour les marchandises en vrac (2) entre le système de renvoi avant et arrière (4.1, 4.2), dans lequel au moins un ensemble d'entraînement (5) est prévu pour entraîner l'au moins une chaîne de transport (3, 3', 3") entre les systèmes de renvoi (4.1, 4.2), qui est en liaison fonctionnelle avec l'au moins une chaîne de transport (3, 3', 3") le long du tronçon de transport (TS), dans lequel l'au moins une chaîne de transport (3, 3', 3") présente plusieurs maillons de chaîne (41, 41') mobiles en rotation et disposés de manière à pouvoir être coulissés les uns par rapport aux autres, dans lequel une section de tronçon de transport (TSA) avec au moins une section d'entrée (TA1) et une section de sortie (TA2) se raccordant directement dans la direction périphérique (U) et/ou la direction de transport de la chaîne de transport (3, 3', 3") avec admission dans l'au moins un ensemble d'entraînement (5) est prévue, dans lequel l'au moins un ensemble d'entraînement (5) est réalisé pour le coulissement relatif des maillons de chaîne (41, 41') les uns par rapport aux autres dans la section d'entrée (TA1) et dans la section de sortie (TA2), pour la poursuite du transport des maillons de chaîne (41, 41') le long de la section de tronçon de transport (TSA) avec une distance relative constante des maillons de chaîne (41, 41') les uns par rapport aux autres le long de la section d'entrée (TA1) et de la section de sortie (TA2), ainsi que pour l'entraînement des maillons de chaîne (41, 41') au moins en partie accumulés dans la section d'entrée (TA1) ainsi que dans la section de sortie (TA2), dans lequel l'au moins un ensemble d'entraînement (5) est réalisé en tant qu'entraînement à vis sans fin (30) avec au moins une vis sans fin (31) entraînée par un moteur, et dans lequel la vis sans fin (31) présente au moins une spire (GA) avec deux sections de spire (GAA1, GAA2), dans lequel la première section de spire (GAA1) est prévue le long de la section d'entrée (TA1) vue dans la direction périphérique (U) et la deuxième section de spire (GAA2) est prévue le long de la section de sortie (TA2) vue dans la direction périphérique (U), **caractérisé en ce qu'**un premier pas de filetage (GS1) du transfert complètement allongé de la chaîne de transport (3, 3', 3") ainsi qu'un deuxième pas de filetage (GS2) du transfert entièrement accumulé de la chaîne de transport (3, 3', 3") sont prévus en superposition dans chacune des deux sections de spire (GAA1, GAA2).

2. Dispositif de transport (1) selon la revendication 1, **caractérisé en ce que** l'au moins un ensemble d'entraînement (5) est réalisé pour générer au moins quatre états de fonctionnement différents (BS1...BS4) de la chaîne de transport (3, 3', 3") le long de la section d'entrée et de sortie (TA1, TA2).

3. Dispositif de transport (1) selon l'une quelconque des revendications précédentes, **caractérisé en ce qu'**au moins un ensemble d'entraînement (5) est réalisé pour générer un premier état de fonctionnement (BS1) dans lequel la chaîne de transport (3, 3', 3") entre de manière allongée dans la section d'entrée (TA1) et sort de manière comprimée de la section de sortie (TA2).

4. Dispositif de transport (1) selon l'une quelconque des revendications précédentes, **caractérisé en ce qu'**au moins un ensemble d'entraînement (5) est réalisé pour générer un deuxième état de fonctionnement (BS2) dans lequel la chaîne de transport (3, 3', 3") entre de manière accumulée dans la section d'entrée (TA1) et sort de manière allongée de la section de sortie (TA2).

5. Dispositif de transport (1) selon l'une quelconque des revendications précédentes, **caractérisé en ce qu'**au moins un ensemble d'entraînement (5) est réalisé pour générer un troisième état de fonctionnement (BS3) dans lequel la chaîne de transport (3, 3', 3") entre de manière allongée dans la section d'entrée (TA1) et ressort de manière allongée de la section de sortie (TA2).

6. Dispositif de transport (1) selon l'une quelconque des revendications précédentes, **caractérisé en ce qu'**au moins un ensemble d'entraînement (5) est réalisé pour générer un quatrième état de fonctionnement (BS4) dans lequel la chaîne de transport (3, 3', 3") entre de manière accumulée dans la section d'entrée (TA1) et ressort de manière accumulée de la section de sortie (TA2).

7. Dispositif de transport (1) selon la revendication 6, **caractérisé en ce que** le premier et le deuxième pas de filetage (GS1, GS2) sont prévus de manière superposée le long de la section de spire (GAA1, GAA2) respective de telle manière que les zones le long de la section de spire (GAA1, GAA2) respective, dans lesquelles le premier et le deuxième pas de filetage (GS1, GS2) ne se coupent pas, forment un espace libre en forme de rainure entre le premier et le deuxième pas de filetage (GS1, GS2) sous la forme de la section de spire (GGA1, GGA2) correspondante.

8. Dispositif de transport (1) selon l'une quelconque des revendications précédentes, **caractérisé en ce qu'**un premier et un deuxième pas de filetage (GS1, GS2) sont réglés de manière adaptée l'un par rapport à l'autre de telle manière que les deux pas de filetage (GS1, GS2) se coupent au moins en un point d'intersection (SP) de la première section de spire (GAA1) dans la deuxième section de spire (GAA2) qui coïncide avec un point de transfert (ÜP) de la section d'entrée (TA1) vers la section de sortie (TA2).

9. Dispositif de transport (1) selon l'une quelconque des revendications précédentes, **caractérisé en ce que** la première et la deuxième section de spire (GAA1, GAA2) avec leur premier et leur deuxième pas de filetage (GS1, GS2) respectifs sont respectivement réalisées avec une symétrie axiale par rapport à un axe de symétrie (SA).

10. Dispositif de transport (1) selon l'une quelconque des revendications précédentes, **caractérisé en ce que** la première section de spire (GAA1) est délimitée latéralement par un flanc avant et un flanc arrière (32, 33) le long de la section d'entrée (TA1), dans lequel le flanc arrière (33) vu respectivement dans la direction périphérique (U) présente le premier pas de filetage (GS1) et le flanc avant (32) vu respectivement dans la direction périphérique (U) présente le deuxième pas de filetage (GS2).

11. Dispositif de transport (1) selon l'une quelconque des revendications précédentes, **caractérisé en ce que** la deuxième section de spire (GAA2) est délimitée latéralement par le flanc avant et le flanc arrière (32, 33) le long de la section de sortie (TA2), dans lequel le flanc arrière (33) vu respectivement dans la direction périphérique (U) présente le deuxième pas de filetage (GS2) et le flanc avant (32) vu respectivement dans la direction périphérique (U) présente le premier pas de filetage (GS1).

12. Utilisation d'un dispositif de transport (1) selon l'une quelconque des revendications 1 à 11 pour transporter des marchandises en vrac (2) dans au moins une direction de transport (A) entre des machines de traitement de contenants et/ou des stations de transition et/ou des stations de transfert et/ou des stations de passage et/ou un tunnel de rétraction et/ou un dispositif de palettisation pour l'industrie du conditionnement et des boissons.
